# EUROPEAN PATENT APPLICATION

(11) **EP 4 618 221 A1**
(43) Date of publication of application: **17.09.2025**
(21) Application number: 23925761.1
(22) Date of filing: 09.03.2023
(51) Int. Cl.: H01M 10/0567

(54) **ELECTROLYTE ADDITIVE, ELECTROLYTE, SECONDARY BATTERY, AND ELECTRICAL DEVICE**

(71) Applicant: Contemporary Amperex Technology (Hong Kong) Limited, Central (HK)
(72) Inventor: LIU, Jiao, Ningde, Fujian 352100 (CN); ZHANG, Limei, Ningde, Fujian 352100 (CN); CHEN, Peipei, Ningde, Fujian 352100 (CN); REN, Jiamo, Ningde, Fujian 352100 (CN)
(74) Representative: Gong, Jinping
(86) International application number: PCT/CN2023/080389
(87) International publication number: WO 2024/183042

(57) **Abstract**

This application relates to the technical field of batteries, and discloses an electrolyte solution additive, an electrolyte solution, a secondary battery, and an electrical device. In a structural formula of the electrolyte solution additive, at least one nitrogen atom having lone pair electrons is included. The lone pair electrons on the nitrogen atom have a strong electron-donating ability, and easily react with electron-deficient R+ to form ----N+-R. This reduces a possibility of reduction of R+ at a negative electrode, reduces damage to an SEI film, and reduces consumption of active lithium at the negative electrode, to improve initial efficiency and cycle performance of a battery.

## Description

### TECHNICAL FIELD

This application relates to the technical field of batteries, and in particular, to an electrolyte solution additive, an electrolyte solution, a secondary battery, and an electrical device.

### BACKGROUND

Featuring high operating potential, long service life, and environmental friendliness, lithium-ion batteries have emerged as the most popular energy storage system, widely used in battery electric vehicles, hybrid electric vehicles, smart power grids, and other fields. However, it is difficult for a current lithium-ion battery to meet people's higher demand for range. To eliminate people's "range anxiety" about electric vehicles, it is urgent to develop a lithium-ion battery with a higher energy density.

During first charge of the battery, a solid electrolyte interphase (SEI) film formed on a surface of a negative electrode consumes a large quantity of lithium sources, and convert lithium into inactive lithium-containing compounds such as lithium carbonate, lithium fluoride, and alkyl lithium, resulting in a loss of recyclable lithium, and reducing a first-cycle coulombic efficiency and a battery capacity. In a battery system using a graphite negative electrode, the first charge consumes about 10% of the lithium sources, and the first-cycle coulombic efficiency is about 90%. When negative electrode materials with a high specific volume, such as alloys (silicon, tin, and aluminum), oxides (silicon oxide, tin oxide, and titanium oxide), and an amorphous carbon negative electrode are used, more lithium sources are further consumed.

To further improve the energy density of the lithium-ion battery, performing pre-lithiation on a positive electrode or a negative electrode is an effective method. During first charging of the positive electrode, excessive lithium sources are provided by using a lithium supplement additive, to compensate for the consumption of lithium caused by forming SEI films at the positive electrode and the negative electrode, improve the energy density of the lithium-ion battery, and improve first-cycle coulombic efficiency and cycle performance of the battery. However, a positive electrode lithium supplement undergoes an irreversible phase transition during the first-cycle charging, and oxygen radicals are generated. The oxygen radicals further oxidize an electrolyte solution to produce a harmful product such as water. The water further causes the electrolyte solution to be decomposed to generate R+ (such as H+). R+ further damages an SEI or undergoes reduction at the negative electrode, consumes active lithium at the negative electrode, and degrades initial efficiency and cycle performance of a battery core.

### SUMMARY

This application is disclosed in view of the foregoing problems, and an objective of this application is to provide an electrolyte solution additive to improve initial efficiency and cycle performance of a battery.

To achieve the foregoing objectives, embodiments of this application provide an electrolyte solution additive, an electrolyte solution, a secondary battery, and an electrical device.

According to a first aspect, an embodiment of this application provides an electrolyte solution additive. In a structural formula of the electrolyte solution additive, at least one nitrogen atom having lone pair electrons is included.

Therefore, in technical solutions of the embodiments of this application, in the structural formula of the electrolyte solution additive, the at least one nitrogen atom having lone pair electrons is included. The lone pair electrons on the nitrogen atom make the nitrogen atom electron-rich and easily react with electron-deficient R+ to form ----N+-R. This reduces a possibility of reduction of R+ at a negative electrode, reduces consumption of active lithium at the negative electrode, and reduces damage to an SEI film, to improve initial efficiency and cycle performance of a battery.

In any embodiment, the electrolyte solution additive includes at least one of a compound represented by a structural formula (I), a compound represented by a structural formula (II), a compound represented by a structural formula (III), a compound represented by a structural formula (IV), and a compound represented by a structural formula (V):

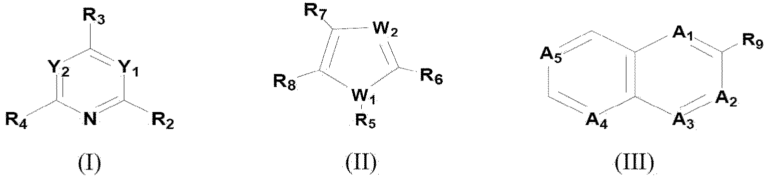

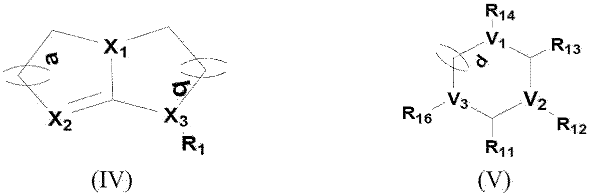

In the structural formula (I), Y₁ and Y₂ each are independently selected from C atom and N atom, and R₂, R₃, and R₄ each are independently selected from H atom, an alkyl group having 1 carbon atom to 6 carbon atoms, an allyl group, a propargyl group, a halogen atom, a hydroxyl group, a primary amine having less than or equal to 6 carbon atoms, a secondary amine having less than or equal to 6 carbon atoms, a tertiary amine having less than or equal to 6 carbon atoms, and an alkoxy group having less than or equal to 6 carbon atoms;

in the structural formula (II), W₁ is selected from C atom, N atom, O atom, and S atom, W₂ is selected from C atom and N atom, and R₅, R₆, R₇, and R₈ each are independently selected from H atom, an alkyl group having 1 carbon atom to 6 carbon atoms, an allyl group, a propargyl group, a halogen atom, a hydroxyl group, a primary amine having less than or equal to 6 carbon atoms, a secondary amine having less than or equal to 6 carbon atoms, a tertiary amine having less than or equal to 6 carbon atoms, and an alkoxy group having less than or equal to 6 carbon atoms;

in the structural formula (III), A₁, A₂, A₃, A₄, and As each are independently selected from C atom and N atom, and R₉ is selected from H atom, an alkyl group having 1 carbon atom to 6 carbon atoms, an allyl group, a propargyl group, a halogen atom, a hydroxyl group, a primary amine having less than or equal to 6 carbon atoms, a secondary amine having less than or equal to 6 carbon atoms, a tertiary amine having less than or equal to 6 carbon atoms, and an alkoxy group having less than or equal to 6 carbon atoms;
in the structural formula (IV), X₁, X₂, and X₃ each are independently selected from C atom and N atom, a and b each are independently selected from a constant ranging from 0 to 3, and R₁ is selected from H atom, an alkyl group having 1 carbon atom to 6 carbon atoms, an allyl group, a propargyl group, a halogen atom, a hydroxyl group, a primary amine having less than or equal to 6 carbon atoms, a secondary amine having less than or equal to 6 carbon atoms, a tertiary amine having less than or equal to 6 carbon atoms, and an alkoxy group having less than or equal to 6 carbon atoms; and
in the structural formula (V), V₁, V₂, and V₃ each are independently selected from C atom and N atom, d is selected from a constant ranging from 0 and 3, and R₁₁, R₁₂, R₁₃, and R₁₄ each are independently selected from H atom, an alkyl group having 1 carbon atom to 6 carbon atoms, an allyl group, a propargyl group, a halogen atom, a hydroxyl group, a primary amine having less than or equal to 6 carbon atoms, a secondary amine having less than or equal to 6 carbon atoms, a tertiary amine having less than or equal to 6 carbon atoms, and an alkoxy group having less than or equal to 6 carbon atoms.

Experiments have shown that, at least one of the compounds defined as the foregoing structural formulas is used as the electrolyte solution additive, and a reaction with electron-deficient R+ is easily performed, so that the initial efficiency and cycle performance of the battery are improved.

In any embodiment, in the structural formula (I), at least one of Y₁ and Y₂ is N atom, and further, both Y₁ and Y₂ are N atoms, so that as many nitrogen atoms as possible can react with R+, and R+ in an electrolyte solution is easily consumed, thereby improving the initial efficiency and cycle performance of the battery.

In any embodiment, in the structural formula (II), at least one of W₁ and W₂ is N atom, and further, both W₁ and W₂ are N atoms, so that as many nitrogen atoms as possible can react with R+, and R+ in the electrolyte solution is easily consumed, thereby improving the initial efficiency and cycle performance of the battery.

In any embodiment, in the structural formula (III), at least one of A₁, A₂, A₃, A₄, and A₅ is N atom, and further, A₁, A₂, A₃, A₄, and A₅ are all N atoms, and A₁, A₂, A₃, A₄, and A₅ are all N atoms, so that as many nitrogen atoms as possible can react with R+, and R+ in the electrolyte solution is easily consumed, thereby improving the initial efficiency and cycle performance of the battery.

In any embodiment, in the structural formula (IV), at least one of X₁, X₂, and X₃ is N atom, and further, X₁, X₂, and X₃ are all N atoms, so that as many nitrogen atoms as possible can react with R+, and R+ in the electrolyte solution is easily consumed, thereby improving the initial efficiency and cycle performance of the battery.

In any embodiment, in the structural formula (V), at least one of V₁, V₂, and V₃ is N atom, and further, V₁, V₂, and V₃ are all N atoms, so that as many nitrogen atoms as possible can react with R+, and R+ in the electrolyte solution is easily consumed, thereby improving the initial efficiency and cycle performance of the battery.

In any embodiment, the compound represented by the structural formula (I) is selected from at least one of the following compounds:

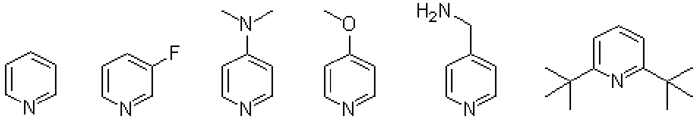

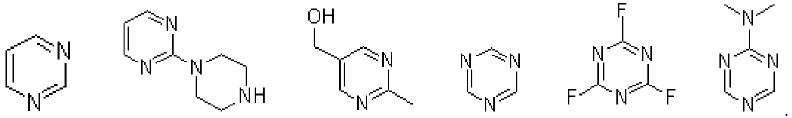

Experiments have shown that, at least one of the compounds is used as the electrolyte solution additive, and R+ in the electrolyte solution is easily consumed, so that the initial efficiency and cycle performance of the battery are improved.

In any embodiment, the compound represented by the structural formula (II) is selected from at least one of the following compounds:

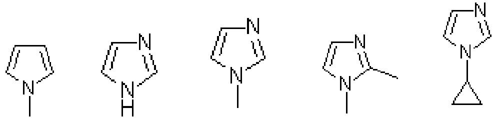

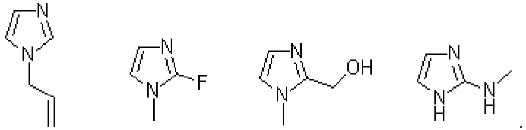

Experiments have shown that, at least one of the compounds is used as the electrolyte solution additive, and R+ in the electrolyte solution is easily consumed, so that the initial efficiency and cycle performance of the battery are improved.

In any embodiment, the compound represented by the structural formula (III) is selected from at least one of the following compounds:

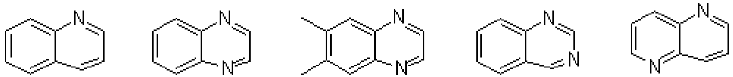

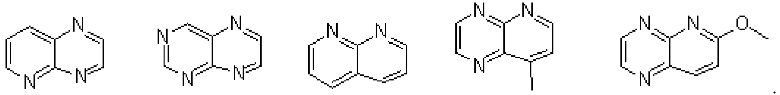

Experiments have shown that, at least one of the compounds is used as the electrolyte solution additive, and R+ in the electrolyte solution is easily consumed, so that the initial efficiency and cycle performance of the battery are improved.

In any embodiment, the compound represented by the structural formula (IV) is selected from at least one of the following compounds:

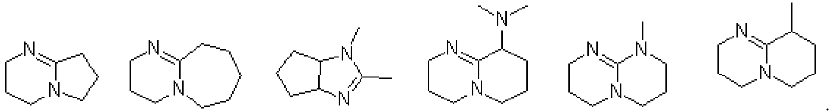

Experiments have shown that, at least one of the compounds is used as the electrolyte solution additive, and R+ in the electrolyte solution is easily consumed, so that the initial efficiency and cycle performance of the battery are improved.

In any embodiment, the compound represented by the structural formula (V) is selected from at least one of the following compounds:

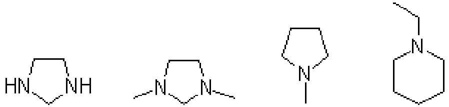

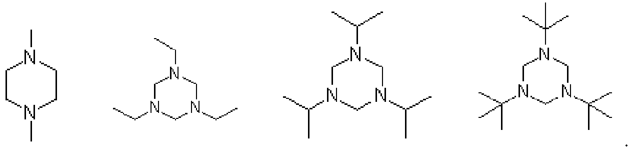

Experiments have shown that, at least one of the compounds is used as the electrolyte solution additive, and R+ in the electrolyte solution is easily consumed, so that the initial efficiency and cycle performance of the battery are improved.

According to a second aspect, an embodiment of this application provides an electrolyte solution, including the electrolyte solution additive described in the foregoing embodiments. The electrolyte solution additive is added to the electrolyte solution, and in the structural formula of the electrolyte solution additive in the foregoing embodiments, the at least one nitrogen atom having lone pair electrons is included. The lone pair electrons on the nitrogen atom make the nitrogen atom electron-rich and easily react with electron-deficient R+ to form --- -N+-R. This reduces a possibility of reduction of R+ at a negative electrode, reduces consumption of active lithium at the negative electrode, and reduces damage to an SEI film, to improve initial efficiency and cycle performance of a battery.

In any embodiment, in the electrolyte solution, a mass percentage of the electrolyte solution additive is defined as W2, and 0.005%≤W2≤20%. Further, 0.1%≤W2≤10%; and furthermore, 1%≤W2≤5%. Experiments have shown that, the mass percentage of the electrolyte solution additive can ensure that the electrolyte solution additive fully consumes R+ in the electrolyte solution without excessive consumption, so that the initial efficiency and cycle performance of the battery are improved.

According to a third aspect, an embodiment of this application provides a secondary battery, including the electrolyte solution additive described in the foregoing embodiments. The electrolyte solution additive is added to an electrolyte solution of the secondary battery, and in the structural formula of the electrolyte solution additive in the foregoing embodiments, the at least one nitrogen atom having lone pair electrons is included. The lone pair electrons on the nitrogen atom make the nitrogen atom electron-rich and easily react with electron-deficient R+ to form --- -N+-R. This reduces a possibility of reduction of R+ at a negative electrode or reduces damage to an SEI film, and reduces consumption of active lithium at the negative electrode, to improve initial efficiency and cycle performance of the battery.

In any embodiment, the secondary battery further includes a positive electrode plate, the positive electrode plate includes a positive electrode lithium supplement, and the positive electrode lithium supplement includes at least one of Li₆CoO₄, Li₅FeO₄, Li₃VO₄, Li₂MoO₃, Li₂RuO₃, Li₂MnO₃, Li₂MnO₂, Li₂NiO₂, Li₂CuO₂, and Li₂CuₓNi₁₋ₓM_{y}O₂, where 0<x<1, 0≤y<0.1, and M includes at least one of Zn, Sn, Mg, Fe, and Mn. The foregoing positive electrode lithium supplement is used. In this way, excessive lithium sources are provided, to compensate for consumption of lithium caused by forming SEI films at a positive electrode and the negative electrode, improve an energy density of a lithium-ion battery, and improve first-cycle coulombic efficiency and cycle performance of the battery. In addition, this reduces a possibility of reduction of R+, generated in the electrolyte solution, at the negative electrode, reduces consumption of active lithium at the negative electrode, and reduces damage to the SEI film, to improve the initial efficiency and cycle performance of the battery.

In any embodiment, the positive electrode plate further includes a current collector, and in the positive electrode plate, a mass of the positive electrode lithium supplement is defined as a, a mass of the current collector is defined as b, and a mass of the positive electrode plate is defined as c, where W1=a/(c-b), and 0.1%≤W1≤10%. Experiments have shown that the mass percentage of the positive electrode lithium supplement can effectively improve the initial efficiency and cycle performance of the battery.

In any embodiment, further, 1%≤W1≤8%; and furthermore, 1%≤W1≤5%. Within the foregoing range, the initial efficiency and cycle performance of the battery can be effectively improved.

In any embodiment, the positive electrode plate further includes a positive electrode active material, and a ratio of a particle size Dv50 of the positive electrode lithium supplement to a particle size Dv50 of the positive electrode active material is defined as A, where 1≤A≤10. Researches have shown that the ratio A also affects a lithium-ion conductivity of the positive electrode plate. As the ratio A decreases, the ion conductivity of the positive electrode plate is improved, but a contact area between the positive electrode lithium supplement and the electrolyte solution is increased. As a result, side reactions are increased, and exertion of a capacity of the lithium-ion battery is poor. When the ratio A is within the foregoing range, the initial efficiency and cycle performance of the battery are good.

In any embodiment, further, 2≤A≤8. The ratio A is within the foregoing range, so that the initial efficiency and cycle performance of the battery are good.

In any embodiment, the secondary battery includes the positive electrode plate, and a specific surface area of the positive electrode plate is defined as B, where B≤20 m²/g. The specific surface area B of the positive electrode plate is less than or equal to 20 m²/g. In this case, the contact area between the positive electrode lithium supplement and the electrolyte solution is reduced. This slows down oxidation of the electrolyte solution at the positive electrode, and optimizes the initial efficiency and cycle performance of the battery. Further, 0.5 m²/g≤B≤10 m²/g. If the specific surface area of the positive electrode plate is too small, polarization of the lithium-ion battery will be too large, which affects the exertion of the capacity of the lithium-ion battery. Within the foregoing range, the initial efficiency and cycle performance of the battery are good.

According to a fourth aspect, an embodiment of this application provides an electrical device, including the secondary battery in the foregoing embodiments of this application.

### DETAILED DESCRIPTION

Embodiments of a binder, a separator, an electrode plate, an electrode assembly, a battery cell, a battery, an electrical device are specifically disclosed in detail below appropriately with reference to detailed descriptions of the accompanying drawings. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by a person skilled in the art. In addition, the accompanying drawings and the following descriptions are provided for a person skilled in the art to fully understand this application, and are not intended to limit the subject matter described in the claims.

A "range" disclosed in this application is defined in a form of a lower limit and an upper limit. A given range is defined by selecting a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if a range of 60 to 120 and a range of 80 to 110 are listed for a particular parameter, it is understood that a range from 60 to 110 and a range from 80 to 120 are also contemplated. In addition, if minimum range values of 1 and 2 are listed and maximum range values of 3, 4, and 5 are listed, the following ranges are all contemplated: 1 to 3, 1 to 4, 1 to 5, 2 to 3, 2 to 4, and 2 to 5. In this application, unless otherwise specified, a numerical range "a to b" represents an abbreviated representation of any combination of real numbers between a to b, where both a and b are real numbers. For example, a numerical range "0 to 5" represents that all real numbers between "0 to 5" have been listed in this specification, and "0 to 5" is just an abbreviated representation of a combination of these numerical values. In addition, when it is stated that a parameter is an integer greater than or equal to 2, it is equivalent to disclosing that the parameter is, for example, an integer such as 2, 3, 4, 5, 6, 7, 8, 9, 10, 11, and 12.

Unless otherwise specified, all embodiments and optional embodiments of this application may be combined with each other to form new technical solutions.

Unless otherwise specified, all technical features and optional technical features of this application may be combined with each other to form new technical solutions.

Unless otherwise specified, all steps of this application may be performed sequentially or randomly, and preferably sequentially. For example, the phrase "the method includes step (a) and step (b)" means that the method may include step (a) and step (b) performed sequentially, or may include step (b) and step (a) performed sequentially. For example, the phrase "the method may further include step (c)" means that step (c) may be added to the method in any order. For example, the method may include step (a), step (b), and step (c), or may include step (a), step (c), and step (b), or may include step (c), step (a), and step (b).

Unless otherwise specified, the terms such as "include", "comprise", and their variants mentioned in this application may be open-ended or closed-ended. For example, the terms such as "include", "comprise", and their variants may mean that other components not listed may be further included or comprised, or only the listed components may be included or comprised.

Unless otherwise specified, the term "or" is inclusive in this application. For example, a phrase "A or B" means "A, B, or both A and B". More specifically, the condition "A or B" is satisfied when any one of the following conditions is satisfied: Ais true (or present) and B is false (or absent); A is false (or absent) and B is true (or present); or both A and B are true (or present).

To further improve an energy density of a lithium-ion battery, performing pre- lithiation on a positive electrode or a negative electrode is an effective method. During first charging of the positive electrode, excessive lithium sources are provided by using a lithium supplement additive, to compensate for consumption of lithium caused by forming SEI films at the positive electrode and the negative electrode, improve the energy density of the lithium-ion battery, and improve first-cycle coulombic efficiency and cycle performance of the battery. However, a positive electrode lithium supplement undergoes an irreversible phase transition during the first-cycle charging, and oxygen radicals are generated. The oxygen radicals further oxidize an electrolyte solution to produce a harmful product such as water. The water further causes the electrolyte solution to be decomposed to generate R+ (such as H+). R+ further damages an SEI or undergoes reduction at the negative electrode, consumes active lithium at the negative electrode, and degrades initial efficiency and cycle performance of a battery core.

Therefore, researches on improvement of the initial efficiency and cycle performance of the battery core are emerging endlessly. For example, a porous material is added to a positive electrode plate. For example, silico-aluminate, zeolite, activated carbon, or molecular sieve is used as an oxygen-absorbing additive, and gas molecules are adsorbed through pores and active sites on the material. However, this method is used as physical adsorption, an adsorption force is not strong, and oxygen absorption cannot be quantitatively controlled. For another example, a transition metal disulfide MS2 is coated on a surface of the positive electrode. Coating MS2, as a reactive oxygen scavenger, on the surface of the positive electrode can eliminate reactive oxygen formed by a high-nickel temary positive electrode material during cycling or storage. However, introduction of the transition metal disulfide increases impedance of the positive electrode plate and degrades the cycle performance of the battery. For another example, a molten metal elementary substance is coated on a surface of a positive electrode active substance, and oxygen generated at the positive electrode is reduced based on reducibility of the metal elementary substance. This has an excellent effect for sustained oxygen release, improves safety performance of the battery, and ensures good electrochemical performance. However, this method has severe preparation conditions and a low yield.

Surprisingly, it is found through a lot of experiments that, an electrolyte solution additive is added to an electrolyte solution, and in a structural formula of the electrolyte solution additive, at least one nitrogen atom having lone pair electrons is included, to improve the initial efficiency and cycle performance of the battery. In this case, there is no need to add a substance to the positive electrode plate, a preparation process of the battery is simplified, and the initial efficiency and cycle performance of the battery are improved.

Based on this, this application provides an electrolyte solution additive, an electrolyte solution, a secondary battery, and an electrical device.

According to a first aspect, this application provides an electrolyte solution additive. In a structural formula of the electrolyte solution additive, at least one nitrogen atom having lone pair electrons is included.

Therefore, in technical solutions of the embodiments of this application, in the structural formula of the electrolyte solution additive, the at least one nitrogen atom having lone pair electrons is included. The lone pair electrons on the nitrogen atom make the nitrogen atom electron-rich and easily react with electron-deficient R+ to form ----N+-R. This reduces a possibility of reduction of R+ at a negative electrode, reduces damage to an SEI film, and reduces consumption of active lithium at the negative electrode, to improve initial efficiency and cycle performance of a battery.

This application does not limit a specific structural formula of the electrolyte solution additive, as long as compounds including nitrogen atoms having lone pair electrons all fall within the protection scope of this application. In any embodiment, the electrolyte solution additive includes at least one of a compound represented by a structural formula (I), a compound represented by a structural formula (II), a compound represented by a structural formula (III), a compound represented by a structural formula (IV), and a compound represented by a structural formula (V):

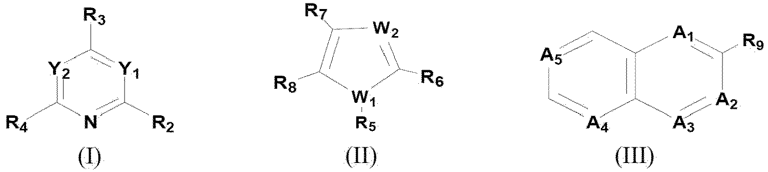

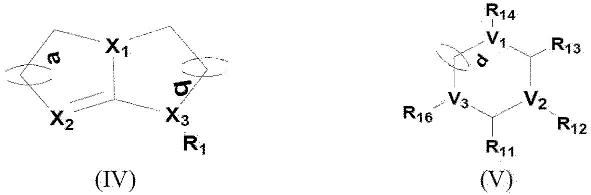

**In** the structural formula (I), Y₁ and Y₂ each are independently selected from C atom and N atom, and R₂, R₃, and R₄ each are independently selected from H atom, an alkyl group having 1 carbon atom to 6 carbon atoms, an allyl group, a propargyl group, a halogen atom, a hydroxyl group, a primary amine having less than or equal to 6 carbon atoms, a secondary amine having less than or equal to 6 carbon atoms, a tertiary amine having less than or equal to 6 carbon atoms, and an alkoxy group having less than or equal to 6 carbon atoms;

in the structural formula (II), W₁ is selected from C atom, N atom, O atom, and S atom, W₂ is selected from C atom and N atom, and R₅, R₆, R₇, and R₈ each are independently selected from H atom, an alkyl group having 1 carbon atom to 6 carbon atoms, an allyl group, a propargyl group, a halogen atom, a hydroxyl group, a primary amine having less than or equal to 6 carbon atoms, a secondary amine having less than or equal to 6 carbon atoms, a tertiary amine having less than or equal to 6 carbon atoms, and an alkoxy group having less than or equal to 6 carbon atoms;

in the structural formula (III), A₁, A₂, A₃, A₄, and As each are independently selected from C atom and N atom, and R₉ is selected from H atom, an alkyl group having 1 carbon atom to 6 carbon atoms, an allyl group, a propargyl group, a halogen atom, a hydroxyl group, a primary amine having less than or equal to 6 carbon atoms, a secondary amine having less than or equal to 6 carbon atoms, a tertiary amine having less than or equal to 6 carbon atoms, and an alkoxy group having less than or equal to 6 carbon atoms;
in the structural formula (IV), X₁, X₂, and X₃ each are independently selected from C atom and N atom, a and b each are independently selected from a constant ranging from 0 to 3, and R₁ is selected from H atom, an alkyl group having 1 carbon atom to 6 carbon atoms, an allyl group, a propargyl group, a halogen atom, a hydroxyl group, a primary amine having less than or equal to 6 carbon atoms, a secondary amine having less than or equal to 6 carbon atoms, a tertiary amine having less than or equal to 6 carbon atoms, and an alkoxy group having less than or equal to 6 carbon atoms; and
in the structural formula (V), V₁, V₂, and V₃ each are independently selected from C atom and N atom, d is selected from a constant ranging from 0 to 3, and R₁₁, R₁₂, R₁₃, and R₁₄ each are independently selected from H atom, an alkyl group having 1 carbon atom to 6 carbon atoms, an allyl group, a propargyl group, a halogen atom, a hydroxyl group, a primary amine having less than or equal to 6 carbon atoms, a secondary amine having less than or equal to 6 carbon atoms, a tertiary amine having less than or equal to 6 carbon atoms, and an alkoxy group having less than or equal to 6 carbon atoms.

Structures of the structural formulas (I), (II), and (III) are conjugated, so that an electron cloud density on N is high. This makes it easier to donate electrons on N and perform a reaction with electron-deficient R+. In the formulas (IV) and (V), element N is directly connected to an electron-donating alkyl group or alkenyl group, so that the electron cloud density on N is higher, and the reaction with electron-deficient R+ is easily performed.

Experiments have shown that, at least one of the compounds defined as the foregoing structural formulas is used as the electrolyte solution additive, and a reaction with electron-deficient R+ is easily performed, so that the initial efficiency and cycle performance of the battery are improved.

It can be understood that the compound represented by the structural formula (I), the compound represented by the structural formula (II), the compound represented by the structural formula (III), the compound represented by the structural formula (IV), and the compound represented by the structural formula (V) in this application are commercially available or may be prepared by using a conventional preparation method in the art. This is not limited in this application.

In any embodiment, in the structural formula (I), at least one of Y₁ and Y₂ is N atom, and further, both Y₁ and Y₂ are N atoms, so that as many nitrogen atoms as possible can react with R+, and R+ in an electrolyte solution is easily consumed, thereby improving the initial efficiency and cycle performance of the battery.

In any embodiment, in the structural formula (II), at least one of W₁ and W₂ is N atom, and further, both W₁ and W₂ are N atoms, so that as many nitrogen atoms as possible can react with R+, and R+ in the electrolyte solution is easily consumed, thereby improving the initial efficiency and cycle performance of the battery.

In any embodiment, in the structural formula (III), at least one of A₁, A₂, A₃, A₄, and A₅ is N atom, and further, A₁, A₂, A₃, A₄, and A₅ are all N atoms, and A₁, A₂, A₃, A₄, and As are all N atoms, so that as many nitrogen atoms as possible can react with R+, and R+ in the electrolyte solution is easily consumed, thereby improving the initial efficiency and cycle performance of the battery.

In any embodiment, in the structural formula (IV), at least one of X₁, X₂, and X₃ is N atom, and further, X₁, X₂, and X₃ are all N atoms, so that as many nitrogen atoms as possible can react with R+, and R+ in the electrolyte solution is easily consumed, thereby improving the initial efficiency and cycle performance of the battery.

In any embodiment, in the structural formula (V), at least one of V₁, V₂, and V₃ is N atom, and further, V₁, V₂, and V₃ are all N atoms, so that as many nitrogen atoms as possible can react with R+, and R+ in the electrolyte solution is easily consumed, thereby improving the initial efficiency and cycle performance of the battery.

In any embodiment, the compound represented by the structural formula (I) is selected from at least one of the following compounds:

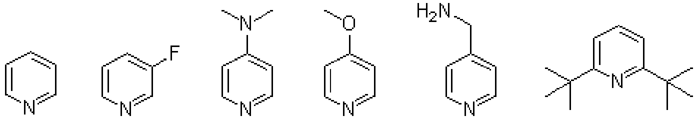

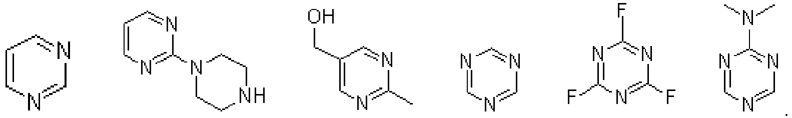

The compounds are sequentially numbered as Compound 1-1, Compound 1-2, Compound 1-3, Compound 1-4, Compound 1-5, Compound 1-6, Compound 1-7, Compound 1-8, Compound 1-9, Compound 1-10, Compound 1-11, and Compound 1-12.

Experiments have shown that, at least one of the compounds is used as the electrolyte solution additive, and R+ in the electrolyte solution is easily consumed, so that the initial efficiency and cycle performance of the battery are improved.

In any embodiment, the compound represented by the structural formula (II) is selected from at least one of the following compounds:

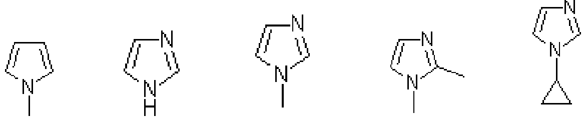

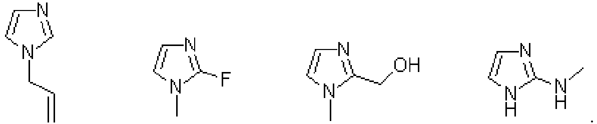

The compounds are sequentially numbered as Compound 2-1, Compound 2-2, Compound 2-3, Compound 2-4, Compound 2-5, Compound 2-6, Compound 2-7, Compound 2-8, and Compound 2-9.

Experiments have shown that, at least one of the compounds is used as the electrolyte solution additive, and R+ in the electrolyte solution is easily consumed, so that the initial efficiency and cycle performance of the battery are improved.

In any embodiment, the compound represented by the structural formula (III) is selected from at least one of the following compounds:

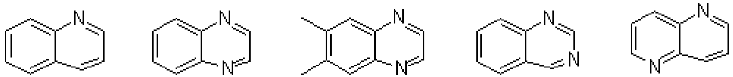

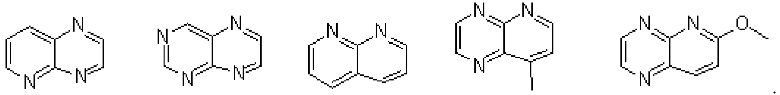

The compounds are sequentially numbered as Compound 3-1, Compound 3-2, Compound 3-3, Compound 3-4, Compound 3-5, Compound 3-6, Compound 3-7, Compound 3-8, Compound 3-9, and Compound 3-10.

Experiments have shown that, at least one of the compounds is used as the electrolyte solution additive, and R+ in the electrolyte solution is easily consumed, so that the initial efficiency and cycle performance of the battery are improved.

In any embodiment, the compound represented by the structural formula (IV) is selected from at least one of the following compounds:

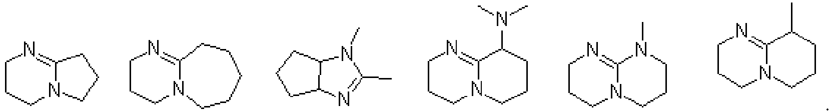

The compounds are sequentially numbered as Compound 4-1, Compound 4-2, Compound 4-3, Compound 4-4, Compound 4-5, and Compound 4-6.

Experiments have shown that, at least one of the compounds is used as the electrolyte solution additive, and R+ in the electrolyte solution is easily consumed, so that the initial efficiency and cycle performance of the battery are improved.

In any embodiment, the compound represented by the structural formula (V) is selected from at least one of the following compounds:

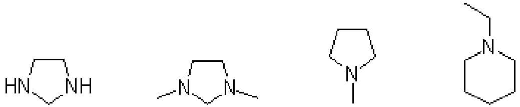

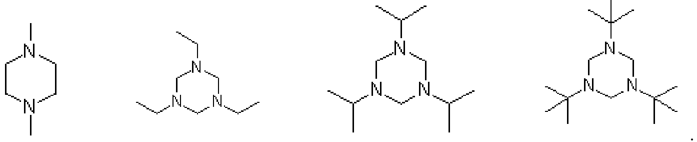

The compounds are sequentially numbered as Compound 5-1, Compound 5-2, Compound 5-3, Compound 5-4, Compound 5-5, Compound 5-6, Compound 5-7, and Compound 5-8.

Experiments have shown that, at least one of the compounds is used as the electrolyte solution additive, and R+ in the electrolyte solution is easily consumed, so that the initial efficiency and cycle performance of the battery are improved.

According to a second aspect, an embodiment of this application provides an electrolyte solution, including the electrolyte solution additive described in the foregoing embodiments. The electrolyte solution additive is added to the electrolyte solution, and in the structural formula of the electrolyte solution additive in the foregoing embodiments, the at least one nitrogen atom having lone pair electrons is included. The lone pair electrons on the nitrogen atom make the nitrogen atom electron-rich and easily react with electron-deficient R+ to form --- -N+-R. This reduces a possibility of reduction of R+ at a negative electrode, reduces damage to an SEI film, and reduces consumption of active lithium at the negative electrode, to improve initial efficiency and cycle performance of a battery.

In any embodiment, in the electrolyte solution, a mass percentage of the electrolyte solution additive is defined as W2, and 0.005%≤W2≤20%. For example, W2 may be equal to 0.005%, 0.01%, 0.05%, 0.1%, 1%, 3%, 5%, 8%, 10%, 15%, 17%, or 20%. Further, 0.1%≤W2≤10%, for example, W2 may be equal to 0.1%, 1%, 2%, 4%, 5%, 6%, 7%, 9%, or 10%. Furthermore, 1%≤W2≤5%, for example, W2 may be equal to 1%, 2%, 3%, 4%, or 5%. Experiments have shown that, the mass percentage of the electrolyte solution additive can make the electrolyte solution additive fully consume R+ in the electrolyte solution without excessive consumption, so that the initial efficiency and cycle performance of the battery are improved.

According to a third aspect, an embodiment of this application provides a secondary battery, including the electrolyte solution additive described in the foregoing embodiments. The electrolyte solution additive is added to an electrolyte solution of the secondary battery, and in the structural formula of the electrolyte solution additive in the foregoing embodiments, the at least one nitrogen atom having lone pair electrons is included. The lone pair electrons on the nitrogen atom make the nitrogen atom electron-rich and easily react with electron-deficient R+ to form --- -N+-R. This reduces a possibility of reduction of R+ at a negative electrode, reduces consumption of active lithium at the negative electrode, and reduces damage to an SEI film, to improve initial efficiency and cycle performance of the battery.

In any embodiment, the secondary battery further includes a positive electrode plate, the positive electrode plate includes a positive electrode lithium supplement, and the positive electrode lithium supplement includes at least one of Li₆CoO₄, Li₅FeO₄, Li₃VO₄, Li₂MoO₃, Li₂RuO₃, Li₂MnO₃, Li₂MnO₂, Li₂NiO₂, Li₂CuO₂, and Li₂CuₓNi₁₋ₓM_{y}O₂, where 0<x<1, 0≤y<0.1, and M includes at least one of Zn, Sn, Mg, Fe, and Mn. The foregoing positive electrode lithium supplement is used. In this way, excessive lithium sources are provided, to compensate for consumption of lithium caused by forming SEI films at a positive electrode and the negative electrode, improve an energy density of a lithium-ion battery, and improve first-cycle coulombic efficiency and cycle performance of the battery. In addition, this reduces a possibility of reduction of R+ at the negative electrode, reduces damage to the SEI film, and reduces consumption of active lithium at the negative electrode, to improve the initial efficiency and cycle performance of the battery.

In any embodiment, the positive electrode plate further includes a current collector, and in the positive electrode plate, a mass of the positive electrode lithium supplement is defined as a, a mass of the current collector is defined as b, and a mass of the positive electrode plate is defined as c, where W1=a/(c-b), and 0.1%≤W1≤10%. For example, W1 may be equal to 0.1%, 1%, 2%, 3%, 4%, 5%, 6%, 7%, 8%, 9%, or 10%. Experiments have shown that the mass percentage of the positive electrode lithium supplement can effectively improve the initial efficiency and cycle performance of the battery.

In any embodiment, further, 1%≤W1≤8%, for example, W1 may be equal to 1%, 2%, 3%, 4%, 5%, 6%, 7%, or 8%; and furthermore, 1%≤W1≤5%, for example, W1 may be equal to 1%, 2%, 3%, 4%, or 5%. Within the foregoing range, the initial efficiency and cycle performance of the battery can be effectively improved.

In any embodiment, the positive electrode plate further includes a positive electrode active material, and a ratio of a particle size Dv50 of the positive electrode lithium supplement to a particle size Dv50 of the positive electrode active material is defined as A, where 1≤A≤10. For example, A may be equal to 1, 2, 3, 4, 5, 6, 7, 8, 9, or 10. Researches have shown that the ratio A also affects a lithium-ion conductivity of the positive electrode plate. As the ratio A decreases, the ion conductivity of the positive electrode plate is improved, but a contact area between the positive electrode lithium supplement and the electrolyte solution is increased. As a result, side reactions are increased, and exertion of a capacity of the lithium-ion battery is poor. When the ratio A is within the foregoing range, the initial efficiency and cycle performance of the battery are good.

It may be understood that Dv50 is a meaning well-known in the art, and means that powder particles larger than and smaller than the particle size each account for 50%, and can be measured by using instruments and methods well-known in the art. For example, Dv50 can be conveniently measured with reference to the GB/T 19077-2016 Particle Size Distribution Laser Diffraction Methods by using a laser particle size analyzer, such as Mastersizer 2000E laser particle size analyzer from Malvern Instruments Co., Ltd., UK.

In any embodiment, further, 2≤A≤8. For example, A may be equal to 1, 2, 3, 4, 5, 6, 7, or 8. The ratio A is within the foregoing range, so that the initial efficiency and cycle performance of the battery are good.

In any embodiment, the secondary battery includes the positive electrode plate, and a specific surface area of the positive electrode plate is defined as B, where B≤20 m²/g. The specific surface area B of the positive electrode plate is less than or equal to 20 m²/g. In this case, the contact area between the positive electrode lithium supplement and the electrolyte solution is reduced. This slows down oxidation of the electrolyte solution at the positive electrode, and optimizes the initial efficiency and cycle performance of the battery. Further, 0.5 m²/g≤B≤10 m²/g, for example, B may be equal to 2 m²/g, 3 m²/g, 4 m²/g, 5 m²/g, 6 m²/g, 7 m²/g, 8 m²/g, 9 m²/g, or 10 m²/g. If the specific surface area of the positive electrode plate is too small, polarization of the lithium-ion battery will be too large, which affects the exertion of the capacity of the lithium-ion battery. Within the foregoing range, the initial efficiency and cycle performance of the battery are good.

Generally, the secondary battery includes a positive electrode plate, a negative electrode plate, an electrolyte, and a separator. During charging and discharging of the battery, active ions are intercalated and deintercalated back and forth between the positive electrode plate and the negative electrode plate. The electrolyte serves to conduct ions between the positive electrode plate and the negative electrode plate. The separator is arranged between the positive electrode plate and the negative electrode plate, and mainly serves to prevent a short circuit between the positive electrode and the negative electrode while allowing the ions to pass through.

Preparation of the secondary battery may be performed by using a method commonly used in the art. For example, the positive electrode plate, the negative electrode plate, and the separator can be made into an electrode assembly by a winding process or a lamination process, and then the electrolyte solution is injected into the electrode assembly and sealed to obtain the secondary battery.

The positive electrode plate includes a positive electrode current collector and a positive electrode film layer arranged on at least one surface of the positive electrode current collector.

By way of example, the positive electrode current collector has two opposite surfaces in a thickness direction thereof, and the positive electrode film layer is arranged on either or both of the two opposite surfaces of the positive electrode current collector.

In some embodiments, the positive electrode current collector may be a metal foil or a composite current collector. For example, the metal foil may be an aluminum foil. The composite current collector may include a polymer material base layer and a metal layer formed on at least one surface of the polymer material base layer. The composite current collector may be formed by forming a metal material (e.g., aluminum, an aluminum alloy, nickel, a nickel alloy, titanium, a titanium alloy, silver, or a silver alloy) on a polymer material substrate (e.g., a substrate of polypropylene (PP), polyethylene terephthalate (PET), polybutylene terephthalate (PBT), polystyrene (PS), or polyethylene (PE)).

In some embodiments, the positive electrode active material is selected from a material capable of deintercalating and intercalating lithium ions. Specifically, the positive electrode active material may be selected from one or more of lithium iron phosphate, lithium manganese iron phosphate, lithium cobalt oxides, lithium nickel oxides, lithium manganese oxides, lithium nickel manganese oxides, lithium nickel cobalt manganese oxides, lithium nickel cobalt aluminum oxides, and compounds obtained by adding other transition metals or non-transition metals to such compounds. The positive electrode plate may further include a conductive agent and a binder. The type and content of the conductive agent and the binder are not specifically limited, and may be selected according to actual requirements.

In some embodiments, the positive electrode plate may be prepared in the following manner. The components for preparing the positive electrode plate, such as the positive electrode active material, the conductive agent, the binder, and any other component, are dispersed in a solvent (e.g., N-methylpyrrolidone) to form a positive electrode slurry. The positive electrode slurry is coated on the positive electrode current collector, followed by drying, cold pressing, and other processes, to obtain the positive electrode plate.

The electrolyte serves to conduct ions between the positive electrode plate and the negative electrode plate. The type of the electrolyte is not particularly limited in this application, and may be selected according to requirements. For example, the electrolyte may be in a liquid, gel, or fully-solid state.

In some embodiments, the electrolyte uses an electrolyte solution. The electrolyte solution includes an electrolyte salt and a solvent.

In some embodiments, the electrolyte salt may be at least one selected from lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may include an organic solvent. A type of the organic solvent is not particularly limited and may be selected according to actual requirements. Specifically, the organic solvent may further include one or more of other types of chain carbonate, cyclic carbonate, and carboxylic acid ester. The types of the chain carbonate, the cyclic carbonate, and the carboxylic acid ester are not particularly limited, and may be selected according to actual requirements. Optionally, the organic solvent further may include one or more selected from the group consisting of diethyl carbonate, dipropyl carbonate, ethyl methyl carbonate (EMC), methyl propyl carbonate, ethyl propyl carbonate, ethylene carbonate (EC), propylene carbonate, butylene carbonate, γ-butyrolactone, methyl formate, ethyl formate, methyl acetate, ethyl acetate, propyl acetate, methyl propionate, ethyl propionate, methyl propionate, and tetrahydrofuran.

In some embodiments, the electrolyte solution may further include other additives selected from at least one of an unsaturated bond-containing cyclic carbonate compound, a halogen-substituted cyclic carbonate compound, a sulfate compound, a sulfite compound, a sultone compound, a disulfonic acid compound, a nitrile compound, an aromatic compound, an isocyanate compound, a phosphazene compound, a cyclic anhydride compound, a phosphite compound, a phosphate compound, a borate compound, and a carboxylic acid ester compound.

The secondary battery further includes a lithium salt. A type of the lithium salt is not particularly limited and may be selected according to actual requirements. Specifically, the lithium salt may be selected from one or more of LiN(CₓF₂ₓ₊₁SO₂)(C_{y}F_{2y+1}SO₂), LiPF₆, LiBF₄, LiBOB, LiAsF₆, Li(FSO₂)₂N, LiCF₃SO₃, and LiClO₄, where x and y are natural numbers. A concentration of the lithium salt ranges from 0.5 M to 2.5 M, and preferably ranges from 0.8 M to 2 M.

In some embodiments, in the secondary battery, a type of a negative electrode active material is not specifically limited, and preferably may be selected from one or more of graphite, soft carbon, hard carbon, mesocarbon microbeads, carbon fibers, carbon nanotubes, elemental silicon, silicon-oxygen compounds, silicon-carbon composites, and lithium titanate. The negative electrode plate may further include a conductive agent and a binder. The type and content of the conductive agent and the binder are not specifically limited, and may be selected according to actual requirements. The type of the negative electrode current collector is also not particularly limited, and may be selected according to actual requirements.

In some embodiments, the secondary battery may include an outer package. The outer package may be configured to package the electrode assembly and the electrolyte.

In some embodiments, the outer package of the secondary battery may be a hard shell, such as a hard plastic case, an aluminum shell, or a steel shell. The outer package of the secondary battery may also be a soft package, such as a pouch-type soft package. The material of the soft package may be plastic, and examples of the plastic include polypropylene, polybutylene terephthalate, polybutylene succinate, and the like.

The secondary battery in at least one of the foregoing embodiments can be assembled into a battery module and a battery pack. There may be one or more battery cells included in the battery module, and a specific quantity may be selected by a person skilled in the art based on application and a capacity of the battery module.

In the battery module, a plurality of secondary batteries may be sequentially arranged in a length direction of the battery module. Certainly, the plurality of secondary batteries may also be arranged in any other manner. Further, the plurality of secondary battery cells may be fixed by a fastener.

In any implementation, the battery module may further include a casing having an accommodating space, and the plurality of secondary battery cells are accommodated in the accommodating space.

In some embodiments, the battery module may be further assembled into a battery pack, and the number of battery modules included in the battery pack may be one or more, which may be specifically determined by a person skilled in the art based on the application and capacity of the battery pack.

According to a fourth aspect, an embodiment of this application provides an electrical device, including the secondary battery in the foregoing embodiments of this application.

The secondary battery, the battery pack, and the battery module each can be used as a power supply of the electrical device, and can also be used as an energy storage unit of the electrical device. The electrical device may include, but is not limited to, a mobile device (e.g., a mobile phone or a notebook computer), an electric vehicle (e.g., a pure electric vehicle, a hybrid electric vehicle, a plug-in hybrid electric vehicle, an electric bicycle, an electric scooter, an electric golf cart, or an electric truck), an electric train, a ship, a satellite, an energy storage system, and the like.

Another example of the apparatus may be a mobile phone, a tablet computer, or a notebook computer. The apparatus is generally required to be thin and light, and may have a secondary battery used as a power supply.

The technical solutions of the present invention are further described in detail below with reference to specific embodiments and the accompanying drawings. It may be understood that the following embodiments are merely intended to explain the present invention, but not to limit the present invention.

Relevant parameters of the negative electrode active material in Examples 1 to 61 and Comparative Example 1 are shown in Table 1 below.

**Table 1 Parameters in Examples 1 to 61 and Comparative Example 1**

| Group | Positive electrode lithium supplement and W1 (wt%) | | Electrolyte solution additive and W2 (wt%) | |
|---|---|---|---|---|
| Comparative Example 1 | / | / | / | / |
| Example 1 | Li₂Cu_{0.6}Ni_{0.4}O₂ | 2 | / | / |
| Example 2 | Li₂Cu_{0.6}Ni_{0.4}O₂ | 2 | Compound 1-1 | 2 |
| Example 3 | Li₂Cu_{0.6}Ni_{0.4}O₂ | 2 | Compound 1-2 | 2 |
| Example 4 | Li₂Cu_{0.6}Ni_{0.4}O₂ | 2 | Compound 1-3 | 2 |
| Example 5 | Li₂Cu_{0.6}Ni_{0.4}O₂ | 2 | Compound 1-4 | 2 |
| Example 6 | Li₂Cu_{0.6}Ni_{0.4}O₂ | 2 | Compound 1-5 | 2 |
| Example 7 | Li₂Cu_{0.6}Ni_{0.4}O₂ | 2 | Compound 1-6 | 2 |
| Example 8 | Li₂Cu_{0.6}Ni_{0.4}O₂ | 2 | Compound 1-7 | 2 |
| Example 9 | Li₂Cu_{0.6}Ni_{0.4}O₂ | 2 | Compound 1-8 | 2 |
| Example 10 | Li₂Cu_{0.6}Ni_{0.4}O₂ | 2 | Compound 1-9 | 2 |
| Example 11 | Li₂Cu_{0.6}Ni_{0.4}O₂ | 2 | Compound 1-10 | 2 |
| Example 12 | Li₂Cu_{0.6}Ni_{0.4}O₂ | 2 | Compound 1-11 | 2 |
| Example 13 | Li₂Cu_{0.6}Ni_{0.4}O₂ | 2 | Compound 1-12 | 2 |
| Example 14 | Li₂Cu_{0.6}Ni_{0.4}O₂ | 2 | Compound 2-1 | 2 |
| Example 15 | Li₂Cu_{0.6}Ni_{0.4}O₂ | 2 | Compound 2-2 | 2 |
| Example 16 | Li₂Cu_{0.6}Ni_{0.4}O₂ | 2 | Compound 2-3 | 2 |
| Example 17 | Li₂Cu_{0.6}Ni_{0.4}O₂ | 2 | Compound 2-4 | 2 |
| Example 18 | Li₂Cu_{0.6}Ni_{0.4}O₂ | 2 | Compound 2-5 | 2 |
| Example 19 | Li₂Cu_{0.6}Ni_{0.4}O₂ | 2 | Compound 2-6 | 2 |
| Example 20 | Li₂Cu_{0.6}Ni_{0.4}O₂ | 2 | Compound 2-7 | 2 |
| Example 21 | Li₂Cu_{0.6}Ni_{0.4}O₂ | 2 | Compound 2-8 | 2 |
| Example 22 | Li₂Cu_{0.6}Ni_{0.4}O₂ | 2 | Compound 2-9 | 2 |
| Example 23 | Li₂Cu_{0.6}Ni_{0.4}O₂ | 2 | Compound 3-1 | 2 |
| Example 24 | Li₂Cu_{0.6}Ni_{0.4}O₂ | 2 | Compound 3-2 | 2 |
| Example 25 | Li₂Cu_{0.6}Ni_{0.4}O₂ | 2 | Compound 3-3 | 2 |
| Example 26 | Li₂Cu_{0.6}Ni_{0.4}O₂ | 2 | Compound 3-4 | 2 |
| Example 27 | Li₂Cu_{0.6}Ni_{0.4}O₂ | 2 | Compound 3-5 | 2 |
| Example 28 | Li₂Cu_{0.6}Ni_{0.4}O₂ | 2 | Compound 3-6 | 2 |
| Example 29 | Li₂Cu_{0.6}Ni_{0.4}O₂ | 2 | Compound 3-7 | 2 |
| Example 30 | Li₂Cu_{0.6}Ni_{0.4}O₂ | 2 | Compound 3-8 | 2 |
| Example 31 | Li₂Cu_{0.6}Ni_{0.4}O₂ | 2 | Compound 3-9 | 2 |
| Example 32 | Li₂Cu_{0.6}Ni_{0.4}O₂ | 2 | Compound 3-10 | 2 |
| Example 33 | Li₂Cu_{0.6}Ni_{0.4}O₂ | 2 | Compound 4-1 | 2 |
| Example 34 | Li₂Cu_{0.6}Ni_{0.4}O₂ | 2 | Compound 4-2 | 2 |
| Example 35 | Li₂Cu_{0.6}Ni_{0.4}O₂ | 2 | Compound 4-3 | 2 |
| Example 36 | Li₂Cu_{0.6}Ni_{0.4}O₂ | 2 | Compound 4-4 | 2 |
| Example 37 | Li₂Cu_{0.6}Ni_{0.4}O₂ | 2 | Compound 4-5 | 2 |
| Example 38 | Li₂Cu_{0.6}Ni_{0.4}O₂ | 2 | Compound 4-6 | 2 |
| Example 39 | Li₂Cu_{0.6}Ni_{0.4}O₂ | 2 | Compound 5-1 | 2 |
| Example 40 | Li₂Cu_{0.6}Ni_{0.4}O₂ | 2 | Compound 5-2 | 2 |
| Example 41 | Li₂Cu_{0.6}Ni_{0.4}O₂ | 2 | Compound 5-3 | 2 |
| Example 42 | Li₂Cu_{0.6}Ni_{0.4}O₂ | 2 | Compound 5-4 | 2 |
| Example 43 | Li₂Cu_{0.6}Ni_{0.4}O₂ | 2 | Compound 5-5 | 2 |
| Example 44 | Li₂Cu_{0.6}Ni_{0.4}O₂ | 2 | Compound 5-6 | 2 |
| Example 45 | Li₂Cu_{0.6}Ni_{0.4}O₂ | 2 | Compound 5-7 | 2 |
| Example 46 | Li₂Cu_{0.6}Ni_{0.4}O₂ | 2 | Compound 5-8 | 2 |
| Example 47 | Li₂Cu_{0.6}Ni_{0.4}O₂ | 0.1 | Compound 1-6 | 2 |
| Example 48 | Li₂Cu_{0.6}Ni_{0.4}O₂ | 1 | Compound 1-6 | 2 |
| Example 49 | Li₂Cu_{0.6}Ni_{0.4}O₂ | 5 | Compound 1-6 | 2 |
| Example 50 | Li₂Cu_{0.6}Ni_{0.4}O₂ | 8 | Compound 1-6 | 2 |
| Example 51 | Li₂Cu_{0.6}Ni_{0.4}O₂ | 10 | Compound 1-6 | 2 |
| Example 52 | Li₂Cu_{0.6}Ni_{0.4}O₂ | 2 | Compound 1-6 | 0.001 |
| Example 53 | Li₂Cu_{0.6}Ni_{0.4}O₂ | 2 | Compound 1-6 | 0.5 |
| Example 54 | Li₂Cu_{0.6}Ni_{0.4}O₂ | 2 | Compound 1-6 | 1 |
| Example 55 | Li₂Cu_{0.6}Ni_{0.4}O₂ | 2 | Compound 1-6 | 5 |
| Example 56 | Li₂Cu_{0.6}Ni_{0.4}O₂ | 2 | Compound 1-6 | 10 |
| Example 57 | Li₂Cu_{0.6}Ni_{0.4}O₂ | 2 | Compound 1-6 | 20 |
| Example 58 | Li₂NiO₂ | 2 | Compound 1-6 | 2 |
| Example 59 | Li₂CuO₂ | 2 | Compound 1-6 | 2 |
| Example 60 | Li₅FeO₄ | 1.5 | Compound 1-6 | 2 |
| Example 61 | Li₆CoO₄ | 1 | Compound 1-6 | 2 |

Examples 1 to 61 and Comparative Example 1 were used for preparation into a lithium-ion battery according to the following method. In Comparative Example 1, no positive electrode lithium supplement and electrolyte solution additive was added.

### (1) Preparation of a positive electrode plate

Lithium iron phosphate as a positive electrode active material, a positive electrode lithium supplement, polyvinylidene fluoride (PVDF) as a binder, and acetylene black as a conductive agent were dissolved in a solvent of N-methylpyrrolidone (NMP) at a mass ratio ranging from (97 to W1):W1:2:1, and were fully stirred and uniformly mixed to obtain a positive electrode slurry. The positive electrode slurry was then uniformly coated on a positive electrode current collector, followed by oven drying, cold pressing, and slitting, to obtain the positive electrode plate.

### (2) Preparation of a negative electrode plate

The active material of artificial graphite, acetylene black as a conductive agent, styrene-butadiene rubber (SBR) as a binder, and sodium carboxymethyl cellulose (CMC) as a thickener were dissolved in a solvent of deionized water at a mass ratio of 95:2:2:1 and uniformly mixed with the solvent of deionized water, to obtain a negative electrode slurry. The negative electrode slurry was then uniformly coated on a copper foil of a negative electrode current collector, and dried to obtain a negative electrode film. The negative electrode film was cold-pressed and slit to obtain the negative electrode plate.

### (3) Preparation of an electrolyte solution

In an argon atmosphere glove box (where H₂O<0.1 ppm, and O₂<0.1 ppm), 1 mol/L of LiPF₆ was dissolved in an organic solvent (where EC/DMC/EMC=1/1/1), the electrolyte solution additive shown in Table 1 was added, and stirring was performed uniformly, to obtain the corresponding electrolyte solution.

### (4) Preparation of a separator: A conventional polypropylene film was used as a separator.

### (5) Preparation of a lithium-ion battery

The positive electrode plate, the separator, and the negative electrode plate were laminated in sequence, so that the separator was located between the positive electrode plate and the negative electrode plate to separate the positive electrode plate from the negative electrode plate, and were wound to obtain an electrode assembly; the electrode assembly was placed in a battery housing, and dried, then an electrolyte solution was injected, followed by processes such as formation and standing to obtain the lithium-ion battery.

The following operations and tests were performed on the lithium-ion battery in Examples 1 to 61 and Comparative Example 1:

### 1. Capacity test of the lithium-ion battery

At 25°C, the lithium-ion battery was charged to 3.65 V at a constant current of 0.33 C, charged at a constant voltage of 3.65 V until the current was less than 0.05 C, and then discharged to 2.5 V at a constant current of 0.33 C. In this case, an actual capacity of the lithium-ion battery was recorded as C0 (mAh). A capacity per gram of the lithium-ion battery is C0/W3 (mAh/g), where W3 represents a mass (g) of the positive electrode active substance and the positive electrode lithium supplement.

### 2. Cycle performance test of the lithium-ion battery at 45°C

At 45°C, the lithium-ion battery was charged to a voltage of 3.65 V at a constant current of 1 C and then charged at a constant voltage of 3.65 V until the current is less than or equal to 0.05 C, and then the battery was discharged to a voltage of 2.5 V at a constant current of 1 C. This was a charge and discharge process. In this case, a discharge capacity was recorded as a discharge capacity of the battery at a first cycle. Charging and discharging cycles were repeated in such a manner, and a quantity of cycles corresponding to cycling of the battery to a capacity retention rate of 80% was calculated.

Capacity retention rate (%) of the battery after N cycles at 45°C=(discharge capacity of the battery at an N^{th} cycle/discharge capacity of the battery at the first cycle)×100%.

Results of the foregoing two tests are shown in Table 2.

**Table 2 Performance measurement on the lithium-ion battery in Examples 1 to 61 and Comparative Example 1**

| | Exertion of a capacity per gram (mAh/g) of a lithium-ion battery | Cycle performance (Fading 80% cycles at 45°C) |
|---|---|---|
| Comparative Example 1 | 145.1 | 1005 |
| Example 1 | 146.1 | 901 |
| Example 2 | 147.2 | 1213 |
| Example 3 | 147.1 | 1201 |
| Example 4 | 148.6 | 1275 |
| Example 5 | 148.5 | 1287 |
| Example 6 | 147.4 | 1203 |
| Example 7 | 148.9 | 1397 |
| Example 8 | 148.1 | 1267 |
| Example 9 | 148.3 | 1256 |
| Example 10 | 148.5 | 1377 |
| Example 11 | 147.9 | 1257 |
| Example 12 | 147.5 | 1301 |
| Example 13 | 148.4 | 1322 |
| Example 14 | 147.8 | 1246 |
| Example 15 | 147.5 | 1238 |
| Example 16 | 147.9 | 1275 |
| Example 17 | 148.1 | 1301 |
| Example 18 | 148.3 | 1311 |
| Example 19 | 148.2 | 1305 |
| Example 20 | 148.1 | 1301 |
| Example 21 | 147.8 | 1298 |
| Example 22 | 147.5 | 1189 |
| Example 23 | 147.9 | 1201 |
| Example 24 | 148 | 1211 |
| Example 25 | 148.2 | 1231 |
| Example 26 | 148.1 | 1212 |
| Example 27 | 148.4 | 1257 |
| Example 28 | 148.6 | 1277 |
| Example 29 | 148.7 | 1321 |
| Example 30 | 147.9 | 1236 |
| Example 31 | 148.2 | 1287 |
| Example 32 | 148.3 | 1231 |
| Example 33 | 148.2 | 1255 |
| Example 34 | 148.1 | 1231 |
| Example 35 | 148.2 | 1277 |
| Example 36 | 148.6 | 1289 |
| Example 37 | 148.5 | 1264 |
| Example 38 | 148.2 | 1233 |
| Example 39 | 147.1 | 1198 |
| Example 40 | 148.5 | 1286 |
| Example 41 | 148.3 | 1275 |
| Example 42 | 148.2 | 1255 |
| Example 43 | 148.6 | 1297 |
| Example 44 | 148.4 | 1331 |
| Example 45 | 148.5 | 1354 |
| Example 46 | 148.7 | 1376 |
| Example 47 | 145.1 | 1321 |
| Example 48 | 146.3 | 1311 |
| Example 49 | 149.1 | 1175 |
| Example 50 | 149.3 | 1121 |
| Example 51 | 149.3 | 1055 |
| Example 52 | 146.2 | 988 |
| Example 53 | 146.6 | 1178 |
| Example 54 | 147.6 | 1264 |
| Example 55 | 147.1 | 1201 |
| Example 56 | 146.7 | 1157 |
| Example 57 | 146.1 | 1021 |
| Example 58 | 148.5 | 1321 |
| Example 59 | 148.6 | 1355 |
| Example 60 | 148.3 | 1311 |
| Example 61 | 148.7 | 1375 |

As can be seen from Table 2, it can be seen from the results of Examples 1 to 46 and Comparative Example 1 that, in Example 1, no lithium supplement and electrolyte solution additive is added, and a positive electrode lithium supplement (Li₂Cu_{0.6}Ni_{0.4}O₂) is introduced into the lithium-ion battery. This can effectively compensate for consumption of lithium caused by forming SEI films at a positive electrode and a negative electrode, and improve exertion of the capacity per gram of the lithium-ion battery. However, the positive electrode lithium supplement oxidizes the electrolyte solution during delithiation, R+ is generated, and R+ is further reduced at the negative electrode. This consumes too much lithium and degrades the cycle performance. An R+ capturing agent is introduced, and N on the capturing agent may further react with R+, to consume R+ in the electrolyte solution, so as to avoid reduction of R+ at the negative electrode or damage to the SEI film, and avoid consumption of too much lithium and degradation of the cycle performance.

It can be seen from the results of Examples 52 to 57 that, when a mass percentage of the R+ capturing additive in the electrolyte solution is within the foregoing preferred range, the cycle performance of the battery core can be improved without degrading the capacity per gram of the battery, thereby improving the initial efficiency and cycle performance of the battery.

It can be seen from the results of Examples 58 to 61 that, an appropriate amount of other positive electrode lithium supplements such as Li₂CuO₂, Li₂NiO₂, Li₅FeO₄, and Li₆CoO₄ is introduced into the lithium-ion battery, and an appropriate amount of capturing R+ additives is used in combination. This can also effectively improve the initial efficiency and cycle performance of the battery.

In conclusion, in the structural formula of the electrolyte solution additive provided in this application, the at least one nitrogen atom having lone pair electrons is included. The lone pair electrons on the nitrogen atom make the nitrogen atom electron-rich and easily react with electron-deficient R+ to form ----N+-R. This reduces a possibility of reduction of R+ at a negative electrode, reduces damage to an SEI film, and reduces consumption of active lithium at the negative electrode, to improve initial efficiency and cycle performance of a battery.

The foregoing descriptions are merely preferred embodiments of the present invention, but are not intended to limit the patent scope of the present invention. A person skilled in the art may make various alterations and variations to the present invention. Any modification, equivalent replacement, or improvement made within the spirit and principle of the present invention shall fall within the patent scope of the present invention.

## Claims

1. An electrolyte solution additive, wherein in a structural formula of the electrolyte solution additive, at least one nitrogen atom having lone pair electrons is comprised.

2. The electrolyte solution additive according to claim 1, wherein the electrolyte solution additive comprises at least one of a compound represented by a structural formula (I), a compound represented by a structural formula (II), a compound represented by a structural formula (III), a compound represented by a structural formula (IV), and a compound represented by a structural formula (V): 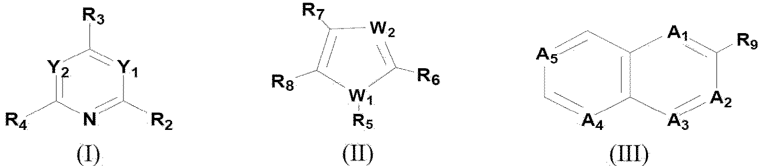 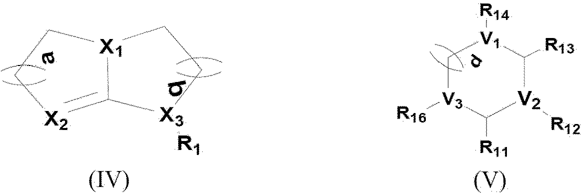
wherein in the structural formula (I), Y₁ and Y₂ each are independently selected from C atom and N atom, and R₂, R₃, and R₄ each are independently selected from H atom, an alkyl group having 1 carbon atom to 6 carbon atoms, an allyl group, a propargyl group, a halogen atom, a hydroxyl group, a primary amine having less than or equal to 6 carbon atoms, a secondary amine having less than or equal to 6 carbon atoms, a tertiary amine having less than or equal to 6 carbon atoms, and an alkoxy group having less than or equal to 6 carbon atoms;
in the structural formula (II), W₁ is selected from C atom, N atom, O atom, and S atom, W₂ is selected from C atom and N atom, and R₅, R₆, R₇, and R₈ each are independently selected from H atom, an alkyl group having 1 carbon atom to 6 carbon atoms, an allyl group, a propargyl group, a halogen atom, a hydroxyl group, a primary amine having less than or equal to 6 carbon atoms, a secondary amine having less than or equal to 6 carbon atoms, a tertiary amine having less than or equal to 6 carbon atoms, and an alkoxy group having less than or equal to 6 carbon atoms;
in the structural formula (III), A₁, A₂, A₃, A₄, and As each are independently selected from C atom and N atom, and R₉ is selected from H atom, an alkyl group having 1 carbon atom to 6 carbon atoms, an allyl group, a propargyl group, a halogen atom, a hydroxyl group, a primary amine having less than or equal to 6 carbon atoms, a secondary amine having less than or equal to 6 carbon atoms, a tertiary amine having less than or equal to 6 carbon atoms, and an alkoxy group having less than or equal to 6 carbon atoms;
in the structural formula (IV), X₁, X₂, and X₃ each are independently selected from C atom and N atom, a and b each are independently selected from a constant ranging from 0 to 3, and R₁ is selected from H atom, an alkyl group having 1 carbon atom to 6 carbon atoms, an allyl group, a propargyl group, a halogen atom, a hydroxyl group, a primary amine having less than or equal to 6 carbon atoms, a secondary amine having less than or equal to 6 carbon atoms, a tertiary amine having less than or equal to 6 carbon atoms, and an alkoxy group having less than or equal to 6 carbon atoms; and
in the structural formula (V), V₁, V₂, and V₃ each are independently selected from C atom and N atom, d is selected from a constant ranging from 0 to 3, and R₁₁, R₁₂, R₁₃, and R₁₄ each are independently selected from H atom, an alkyl group having 1 carbon atom to 6 carbon atoms, an allyl group, a propargyl group, a halogen atom, a hydroxyl group, a primary amine having less than or equal to 6 carbon atoms, a secondary amine having less than or equal to 6 carbon atoms, a tertiary amine having less than or equal to 6 carbon atoms, and an alkoxy group having less than or equal to 6 carbon atoms.

3. The electrolyte solution additive according to claim 2, wherein in the structural formula (I), at least one of Y₁ and Y₂ is N atom;
in the structural formula (II), at least one of W₁ and W₂ is N atom;
in the structural formula (III), at least one of A₁, A₂, A₃, A₄, and As is N atom;
in the structural formula (IV), at least one of X₁, X₂, and X₃ is N atom; and/or
in the structural formula (V), at least one of V₁, V₂, and V₃ is N atom.

4. The electrolyte solution additive according to claim 2, wherein in the structural formula (I), both Y₁ and Y₂ are N atoms;
in the structural formula (II), both W₁ and W₂ are N atoms;
in the structural formula (III), A₁, A₂, A₃, A₄, and As are all N atoms;
in the structural formula (IV), X₁, X₂, and X₃ are all N atoms; and/or
in the structural formula (V), V₁, V₂, and V₃ are all N atoms.

5. The electrolyte solution additive according to any one of claims 2 to 4, wherein the compound represented by the structural formula (I) is selected from at least one of the following compounds: 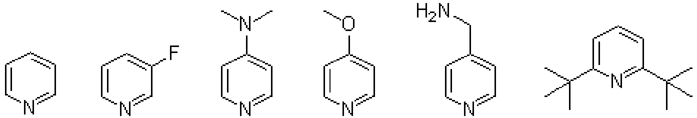 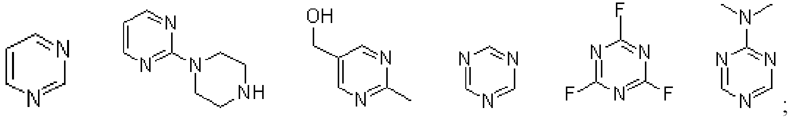
the compound represented by the structural formula (II) is selected from at least one of the following compounds: 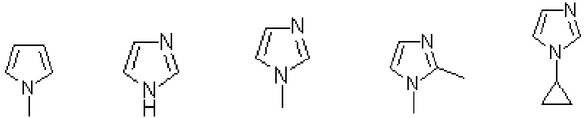 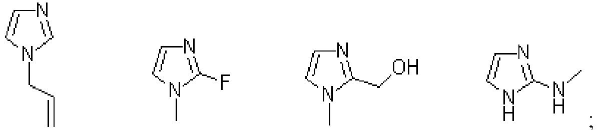
the compound represented by the structural formula (III) is selected from at least one of the following compounds: 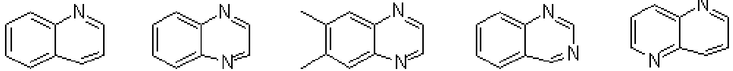 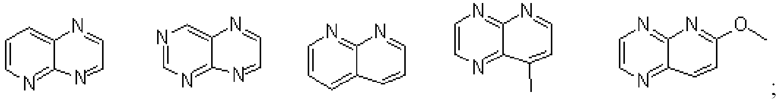
the compound represented by the structural formula (IV) is selected from at least one of the following compounds: 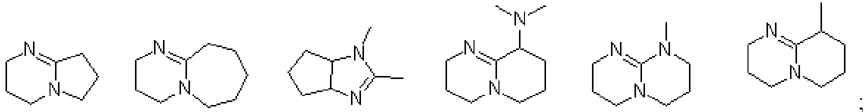 and/or
the compound represented by the structural formula (V) is selected from at least one of the following compounds:

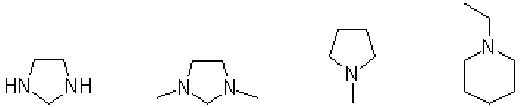

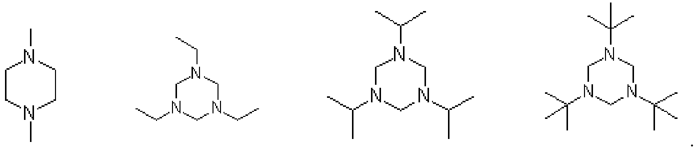

6. An electrolyte solution, comprising the electrolyte solution additive according to any one of claims 1 to 5.

7. The electrolyte solution according to claim 6, wherein in the electrolyte solution, a mass percentage of the electrolyte solution additive is defined as W2, and 0.005%≤W2≤20%.

8. The electrolyte solution according to claim 6, wherein 0.005%≤W2≤10%, and preferably, 1%≤W2≤5%.

9. A secondary battery, comprising the electrolyte solution additive according to any one of claims 1 to 5.

10. The secondary battery according to claim 9, wherein the secondary battery further comprises a positive electrode plate, the positive electrode plate comprises a positive electrode lithium supplement, and the positive electrode lithium supplement comprises at least one of Li₆CoO₄, Li₅FeO₄, Li₃VO₄, Li₂MoO₃, Li₂RuO₃, Li₂MnO₃, Li₂MnO₂, Li₂NiO₂, Li₂CuO₂, and Li₂CuₓNi₁₋ₓM_{y}O₂, wherein 0<x<1, 0≤y<0.1, and M comprises at least one of Zn, Sn, Mg, Fe, and Mn.

11. The secondary battery according to claim 10, wherein the positive electrode plate further comprises a current collector, and in the positive electrode plate, a mass of the positive electrode lithium supplement is defined as a, a mass of the current collector is defined as b, and a mass of the positive electrode plate is defined as c, wherein W1=a/(c-b), and 0.1%≤W1≤10%.

12. The secondary battery according to claim 11, wherein 1%≤W1≤8%, and preferably,
1%≤W1≤5%.

13. The secondary battery according to any one of claims 10 to 12, wherein the positive electrode plate further comprises a positive electrode active material, and a ratio of a particle size Dv50 of the positive electrode lithium supplement to a particle size Dv50 of the positive electrode active material is defined as A, wherein 1≤A≤10.

14. The secondary battery according to claim 13, wherein 2≤A≤8.

15. The secondary battery according to any one of claims 9 to 14, wherein the secondary battery comprises the positive electrode plate, and a specific surface area of the positive electrode plate is defined as B, wherein B≤20 m²/g.

16. The secondary battery according to claim 15, wherein 0.5 m²/g≤B≤10 m²/g.

17. An electrical device, comprising the secondary battery according to any one of claims 9 to 16.
